# EUROPEAN PATENT SPECIFICATION

(11) **EP 4 012 531 B1**
(45) Date of publication and mention of the grant of the patent: **30.08.2023**
(21) Application number: 21172210.3
(22) Date of filing: 05.05.2021
(51) Int. Cl.: G06V 20/52, G05D 1/02

(54) **AUTONOMOUS SYSTEM FOR 3D MAPPING OF A DATACENTER**
AUTONOMES SYSTEM ZUR 3D ABBILDUNG EINES DATENZENTRUMS
SYSTÈME AUTONOME D'ENCARTAGE 3D D'UN CENTRE DE TRAITEMENT DE DONNÉES

(30) Priority: 14.12.2020 US 202017120949
(43) Date of publication of application: 15.06.2022
(73) Proprietor: Google LLC, Mountain View, CA 94043 (US)
(72) Inventor: REICHENBACH, Joseph, Mountain View, CA 94043 (US); BRADLEY, Seth Jordan, Mountain View, CA 94043 (US); COOMES, Christopher James, Mountain View, CA 94043 (US); RAVI, Nivedita, Mountain View, CA 94043 (US)
(74) Representative: Betten & Resch

(56) References cited:
- WO-A1-2012/068675
- BORRMANN DORIT ET AL: "A mobile robot based system for fully automated thermal 3D mapping", ADVANCED ENGINEERING INFORMATICS, vol. 28, no. 4, 21 July 2014 (2014-07-21), pages 425-440, XP055815756, AMSTERDAM, NL ISSN: 1474-0346, DOI: 10.1016/j.aei.2014.06.002 Retrieved from the Internet: URL:https://robotik.informatik.uni-wuerzbu rg.de/telematics/download/advei2014.pdf> [retrieved on 2021-06-21]
- ADÁN ANTONIO ET AL: "Autonomous Mobile Scanning Systems for the Digitization of Buildings: A Review", REMOTE SENSING, 2019, 11, 306, vol. 11, no. 3, 2 February 2019 (2019-02-02), XP055816481, DOI: 10.3390/rs11030306
- ZHAO PENGCHENG ET AL: "Panoramic Image and Three-Axis Laser Scanner Integrated Approach for Indoor 3D Mapping", REMOTE SENSING, vol. 10, no. 8, 12 August 2018 (2018-08-12), pages 1-18, XP055815643, DOI: 10.3390/rs10081269 [retrieved on 2021-06-21]

## Description

### BACKGROUND

Datacenter interiors are complex, varied, and dynamic. This family of attributes encompasses construction, configuration, maintenance, and repairs of the datacenter and devices (servers, racks, etc.) within datacenters. Often, the actual arrangement and content of these attributes is somewhere between estimated and historical. Continual monitoring and cataloging of these datacenter attributes to mitigate the gap between theory and practice has been difficult to achieve.

The state of datacenter rack contents is theorized based on various tools and processes, but the knowledge of the rack contents is not always entirely accurate. Conventional tools may store the state of datacenter rack contents using information that is manually entered, based on barcode asset tag information. However, if such rack content information is incorrect or only partially accurate, there may not be an easy way to correct such inaccuracies.

BORRMANN DORIT ET AL: "A mobile robot based system for fully automated thermal 3D mapping", ADVANCED ENGINEERING INFORMATICS, vol. 28, no. 4, 21 July 2014, pages 425-440, relates to an automatic system that creates 3D thermal models of indoor environments.

ADAN ANTONIO ET AL: "Autonomous Mobile Scanning Systems for the Digitization of Buildings: A Review", REMOTE SENSING, 2019, 11,306, vol. 11, no. 3, 2 February 2019, relates to a critical review of autonomous scanning systems.

ZHAO PENGCHENG ET AL: "Panoramic Image and Three-Axis Laser Scanner Integrated Approach for Indoor 3D Mapping", REMOTE SENSING, vol. 10, no. 8, 12 August 2018, pages 1-18, relates to the design of indoor mapping equipment integrating a three-axis laser scanner and panoramic camera.

Document WO 2012/068675 A1 relates to imaging robots for automated imaging of surfaces.

### BRIEF SUMMARY

The presently claimed subject-matter is defined in independent claims 1 and 7. Embodiments are defined in the dependent claims. There are provided automated imaging systems and methods of imaging a physical location, such as a datacenter, with an automated guided vehicle (AGV). The AGV may be equipped with a distance detection tool, such as a laser, to detect distances between the AGV and different surfaces within the physical location. The imaging system includes a plurality of cameras configured to capture a plurality of images from within the physical location. Moreover, the imaging system may correlate the distances with the plurality of images, and may generate a map of the physical location using the plurality of images and the distances.

One aspect of the disclosure provides an automated imaging system, including an automated guided vehicle having a propulsion system configured to move the vehicle, and a processor configured to control the motor and the steering system, an optical imaging system, the optical imaging system including a plurality of cameras, the cameras each being configured to have a respective field of view, the fields of view being at least partially non-overlapping with one another, a laser imaging system, the laser imaging system configured to scan a physical area to obtain respective distances between the vehicle and a plurality of locations within the physical area, and one or more processors configured to correlate a plurality of images taken by the cameras with the respective distances taken by the laser imaging system.

The cameras are arranged in an array, and the array is moveable in a vertical direction. The cameras in the array may be spaced apart from one another in a circular pattern that extends in a plane parallel to the vertical direction. The plurality of images may include a first set of the images and a first set of the distances taken at a first vertical position and a second set of the images and a second set of the distances taken at a second vertical position, the first vertical position and the second vertical position being spaced apart from one another in the vertical direction.

According to some examples, the one or more processors are further configured to combine the plurality of images taken by the cameras with the respective distances taken by the laser imaging system into a map. A wireless communication component may be configured to communicate with a remote computing system. The one or more processors may be configured to navigate the vehicle to a particular location based on communication from the remote computing system, the particular location corresponding to at least one of the plurality of images captured by the imaging system. The propulsion system may include a plurality of wheels rotatably mounted to the housing, a driving element configured to rotate the wheels, a steering system configured to pivot the wheels and navigate the housing along predetermined paths, and a processor configured to control the motor and the steering system.

Another aspect of the disclosure provides a method of imaging a physical area with an automated guided vehicle. The method may include moving the automated guided vehicle to a plurality of locations within the physical area by a propulsion system that navigates the vehicle along predetermined paths, taking a plurality of images of the physical area with an optical imaging system coupled to the vehicle, the optical imaging system including a plurality of cameras, the cameras each being configured to have a respective field of view, the fields of view being at least partially non-overlapping with one another, scanning the physical area with a laser imaging system coupled to the vehicle to obtain a plurality of distances between the vehicle and a plurality of locations within the physical area, and correlating the plurality of images taken by the cameras with the plurality of distances taken by the laser imaging system.

According to some examples, the method may further include locating the plurality of images and the plurality of distances relative to a known coordinate system of the physical area.

The cameras are arranged in an array, and the array is moveable in a vertical direction perpendicular to a floor of the physical area. The cameras in the array may be spaced apart from one another in a circular pattern that extends in a plane parallel to the vertical direction. The taking of the plurality of images may include taking a first set of the images and a first set of the distances at a first vertical position, moving the array from the first vertical position to a second vertical position spaced apart from the first vertical position in the vertical direction, and taking a second set of the images and a second set of the distances at the second vertical position. The imaging system may include a fixture having a rail extending in the vertical direction and a carriage coupled to the rail and movable relative to the rail in the vertical direction, the cameras being affixed to the carriage, and the moving of the array includes moving the carriage along the rail from the first vertical position to the second vertical position. Moving the carriage along the rail may be driven by a servo motor coupled to the carriage.

According to some examples, the method may further include wirelessly sending the plurality of images and the plurality of distances to an image processor, the image processor being part of a computer that is remote from the automated guided vehicle. Moving the automated guided vehicle to the first target location may include moving the automated guided vehicle in a horizontal direction perpendicular to the vertical direction, and the fields of view extend from the plurality of cameras in a depth direction perpendicular to both the horizontal direction and the vertical direction.

According to another aspect not covered by the claims but helpful for understanding the disclosure there is provided a method of imaging a physical area with an automated guided vehicle, the method including moving the automated guided vehicle to a plurality of locations within the physical area by a propulsion system that navigates the vehicle along predetermined paths, taking an initial plurality of images of the physical area with an imaging system coupled to the vehicle, the imaging system including a plurality of cameras, the cameras each being configured to have a respective field of view, the fields of view being at least partially non-overlapping with one another, the taking of the initial plurality of images including taking a first set of the images at a first vertical position, moving the plurality of cameras from the first vertical position to a second vertical position spaced apart from the first vertical position in the vertical direction, and taking a second set of the images at the second vertical position, combining the initial plurality of images taken by the cameras into an initial single mosaic image using an image processor, and locating the initial plurality of images relative to a known coordinate system of the physical area.

The method may further include receiving a selection of a location within the initial single mosaic image to move the automated guided vehicle to one of the plurality of locations and to take an updated plurality of images, and combining the updated plurality of images with the initial plurality of images taken by the cameras into an updated single mosaic image using the image processor.

### BRIEF DESCRIPTION OF THE DRAWINGS

FIG. 1A is a side view of an example automated 360 degree imaging system according to aspects of the disclosure.
FIG. 1B is a perspective view of an example automated imaging system.
FIG. 1C is a side view of the automated imaging system of FIG. 1A.
FIG. 1D is a front view of the automated imaging system of FIG. 1A.
FIG. 1E is a side view of the automated imaging system of FIG. 1A, illustrating distance detection according to aspects of the disclosure.
FIG. 2A is an example array of datacenter images that may be captured by the automated datacenter imaging system of FIGS. 1B-D.
FIG. 2B is a single mosaic datacenter image captured by the imaging system of FIG. 1A or generated by combining the array of datacenter images of FIG. 2A.
FIG. 2C is a datacenter map based on the single mosaic datacenter image of FIG. 2B.
FIG. 3 is a diagrammatic view of a control system that may be used to control the automated imaging system of FIG. 1A.
FIG. 4 is a flow diagram of a method using the automated imaging system of FIG. 1A to determine the state of the datacenter layout.

### DETAILED DESCRIPTION

The technology relates generally to automated 3D imaging systems and methods of imaging a physical location using an automated guided vehicle (AGV). The physical location may be, for example, a datacenter or other indoor space. For example, the automated imaging system may be configured to take a plurality of high resolution images of a datacenter rack, and combine the plurality of images into a single mosaic image. The system may parse location and barcode data from the combined mosaic image, thereby providing accurate current location and data information of the contents of the datacenter in an automated fashion. The automated imaging system may also provide real-time inventory location and data for commercial and retail racks of products that may not otherwise be obtained in an automated fashion.

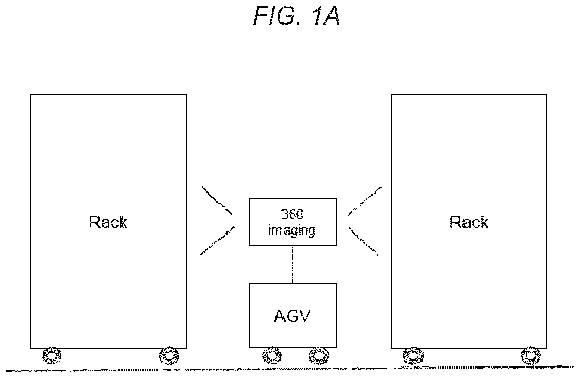

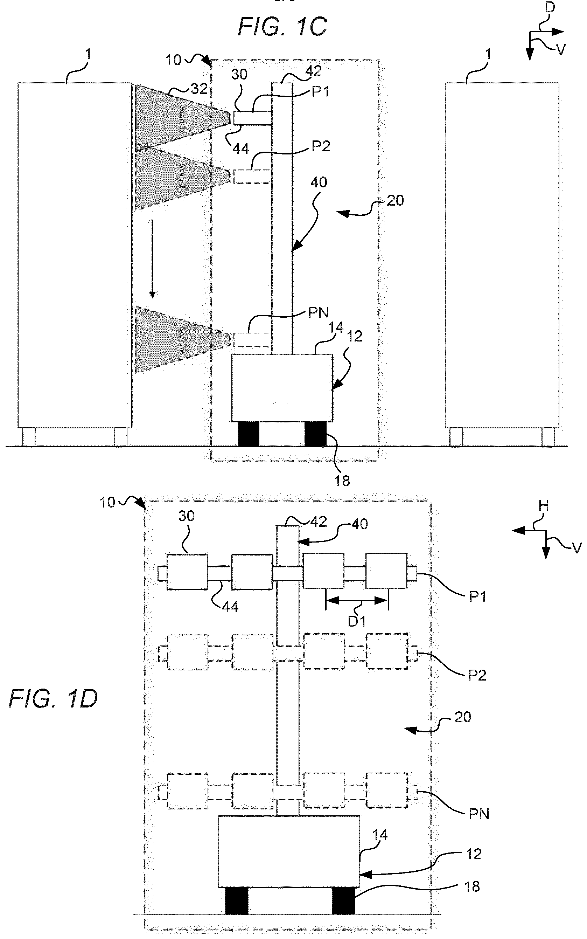

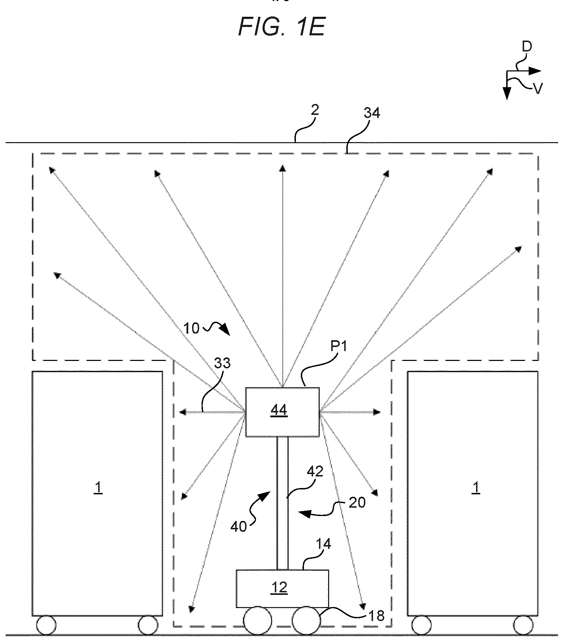

Referring to FIG. 1A, an AGV having an imaging system mounted thereon may be navigated through a physical location and used to capture 360 degree images of the location. The 360 degree images may then be used to generate a map of the physical location. According to some examples, such as described below in connection with FIG. 1E, the AGV may further detect distances between the AGV and various points within the physical location. The distances may be correlated with the captured 360 images and used to generate the map. The physical location as shown in this example and described in further examples herein is a datacenter. However, it should be understood that the physical location may be any of a variety of types of location, such as warehouses, manufacturing plants, etc.

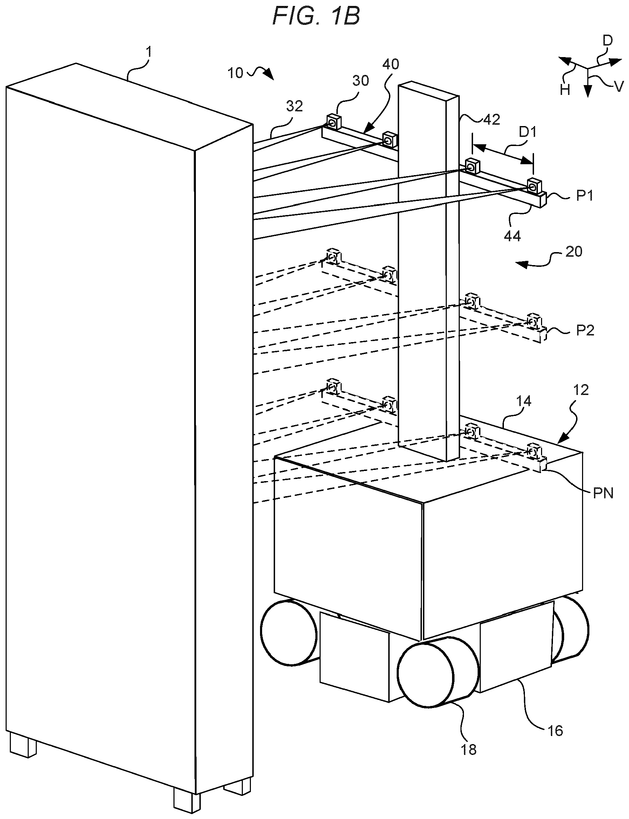

Figs. 1B-1D illustrate just one example of an automated 3D imaging system 10 that may be used for imaging a datacenter rack 1. The automated imaging system 10 may include an AGV 12 having a housing 14 and a propulsion system 16 configured to move the AGV. The housing 14 is shown as being generally in the shape of a rectangular prism, but in other examples, the housing may have any other shape, such as a square prism, a cylinder, or the like. In other examples, the housing 14 may be omitted, such that mechanical and/or electrical components of the AGV 12 are exposed.

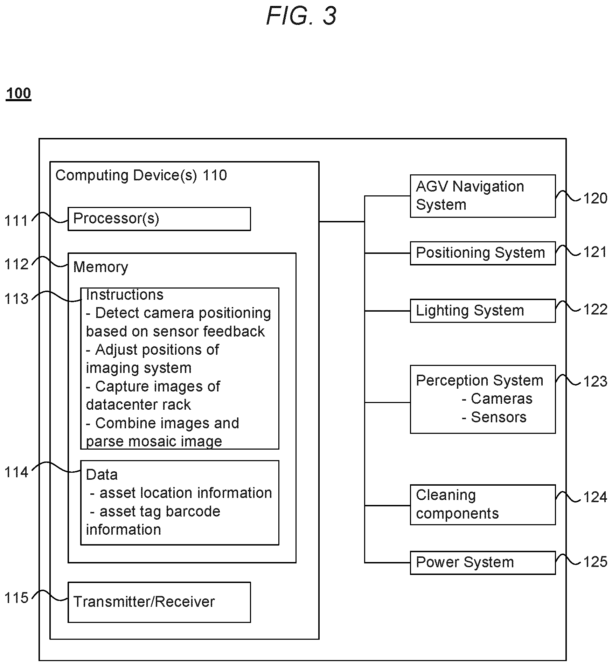

The propulsion system 16 may include a motor and/or another driving element that is configured to rotate a plurality of wheels 18 that are rotatably mounted to the AGV 12, a steering system (not shown) that is configured to pivot the wheels and navigate the AGV 12 along predetermined paths, and a processor or control system 100 (described below with respect to FIG. 3) that is configured to control the motor and the steering system.

The AGV 12 may also include sensors (not shown) for detecting conditions surrounding the AGV. The example configuration of the AGV 12 that is shown in FIGS. 1B through 1D is merely one possible example of a flexible mobile robotics platform. In other examples, there may be many other configurations of components for moving the AGV 12 from one location to another.

While the AGV 12 is in use, the location of the AGV may be known relative to a known 3D coordinate system of the physical area in which the AGV is navigated, such as a datacenter. To obtain its position within the known coordinate system as it moves, the AGV 12 may read barcodes on the floor that are at known locations within the coordinate system. As it travels, the AGV 12 may synchronize its location relative to the barcodes.

The automated imaging system 10 may also include an imaging system 20 coupled to the AGV 12. The imaging system 20 may include a plurality of cameras 30. The cameras 30 each may be configured to have a respective field of view 32. The fields of view 32 may be at least partially non-overlapping with one another, although in some examples, the fields of view may be entirely non-overlapping with one another. The fields of view 32 of the cameras 30 may extend away from the cameras in a depth direction D between an object, such as a datacenter rack 1, and the cameras.

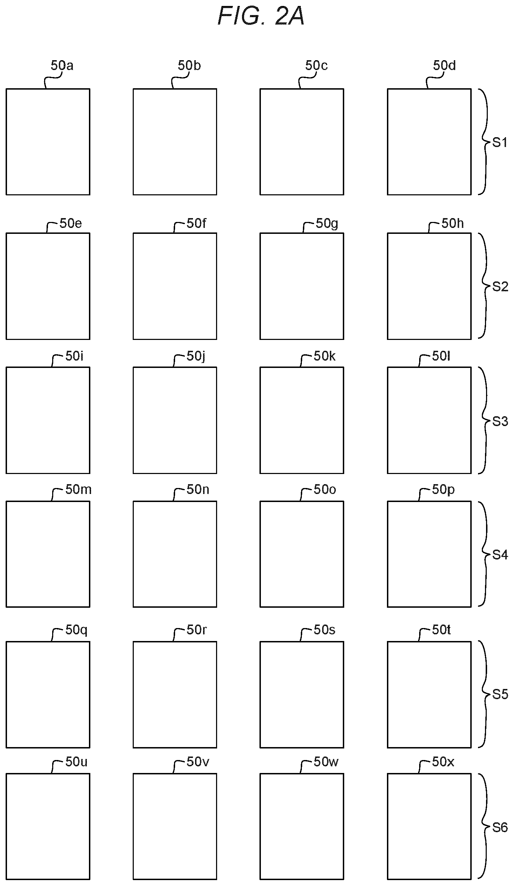

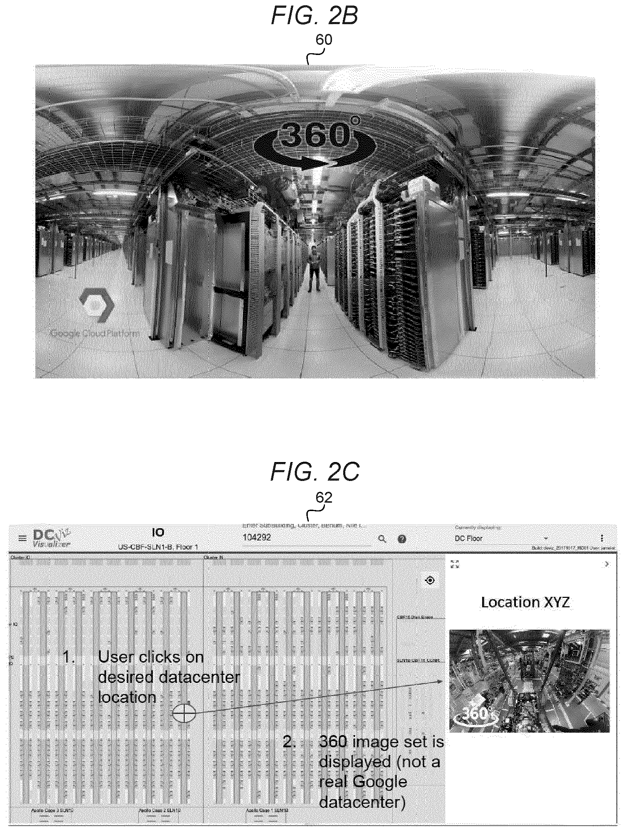

The automated imaging system 10 may include an image processor (e.g., the processor 111 shown in FIG. 3) configured to combine a plurality of images taken by the cameras 30 into a single mosaic image. Examples of the plurality of images and the single mosaic image will be shown and described below with respect to FIGS. 2A and 2B. Although the fields of view 32 are shown as extending towards a rack 1, the cameras 30 may be used to record the location of everything in the datacenter, including hallways, doors, columns, racks, fans, wireways, and the like. The image processing may be completely automated, such that the single mosaic image, a 360 image, and/or a map of the physical location may be generated from the captured images without human intervention.

The cameras 30 may include one or more optical cameras and a laser imaging system, such as one or more LIDAR scanners. While the cameras 30 are shown in an arrangement of several rows stacked vertically, it should be understood that other arrangements are possible. For example, the cameras may be positioned in a 360 degree configuration about a vertical axis or a horizontal axis. As another example, the cameras may be arranged in a rosette such that the cameras collectively capture every angle around the AGV. In yet further examples, the cameras may be a single 360 degree camera.

The optical cameras may obtain images that may be combined to obtain a visual map of the physical location. For example, captured images may be combined to generate a map of an entire datacenter, such that individual rack components may be visually identified.

Fig. 1E illustrates an example of using the AGV to detect distances between the AGV and various points within the physical location. For example, the LIDAR scanners may scan in directions 33 to obtain location data and/or temperature data of the contents of the physical location, within a mapping envelope 34. The LIDAR scanners may obtain more accurate positional data than the optical cameras. The LIDAR scanners may obtain dimensional location of doors, columns, racks, fans, and wireways close to a ceiling 2 of the physical location.

The dimensional accuracy of the LIDAR scanning may be within approximately plus or minus 10 mm. In some examples, a single LIDAR scanner may be used, in which an internal electro-mechanical mirror system may move a single laser beam around, permitting approximately one thousand distances to be collected while the AGV is at a single location. In other examples, a fixed array of lasers may be used. Although the system 10 is described as including LIDAR scanners, some examples only use optical images, while other examples combine optical and LIDAR data.

In the example illustrated, the imaging system 20 may include a fixture 40 affixed to the housing, the fixture having a rail 42 extending in a vertical direction V perpendicular to the depth direction D, and a carriage 44 extending in a horizontal direction H perpendicular to the vertical direction and the depth direction. The cameras 30 may be affixed to the carriage 44. The cameras 30 may be arranged along the carriage 44 in an array extending in the horizontal direction H. The cameras 30 in the array may be equally spaced apart from one another by a distance D1 in the horizontal direction. The carriage 44 may be coupled to the rail 42 such that the carriage and the array of cameras 30 affixed thereto are moveable relative to the rail in the vertical direction V. The imaging system 20 may include a servo motor (not shown) configured to move the carriage 44 in the vertical direction V along the rail 42. It should be understood that in other examples, the imaging system 20 may include other arrangements of the cameras 30, such as by implementing other mounting fixtures or mechanisms.

Although the cameras 30 are described above as arranged along the carriage 44 in an array extending in the horizontal direction H, in alternative examples, the cameras may be arranged in a circular ring around a vertical axis and extending in a plane that is perpendicular to the depth direction D. The circular ring may be movable in the vertical direction V along the rail 42. According to further examples, the cameras may be arranged in a ring extending around a longitudinal axis. In further examples, the cameras may be arranged in a rosette or sphere shaped, thereby capturing substantially all of the surroundings of the AGV. In yet further examples, the cameras may be a single 360 degree camera.

The carriage 44 may be moveable in the vertical direction V to any position along the rail 42. First, second, and Nth vertical positions P1, P2, and PN of the carriage 44 are shown in FIG. 1B, which are spaced apart from one another in the vertical direction V. As can be seen in FIG. 1C, the cameras 30 can each take a separate image scan when the carriage 44 is in each position along the vertical direction V. Each camera 30 may take any number "N" of image scans that is needed to form a complete mosaic image of the features of the datacenter when the images are combined by the image processor. As mentioned above, the combination of such images may be completely automated.

As shown in FIG. 1B, the carriage 44 may start in the first vertical position P1 and may be moved downwards in the vertical direction V, and each camera may record a plurality of image scans at each vertical position as the carriage continues to move downwards, until the carriage reaches an end of its travel range at the Nth vertical position PN. It should be understood that the imaging system 20 is one example of an imaging system, and that in other examples, any of a variety of other implementations of a system that can carry and move the cameras 30 to scan images of the datacenter may be used.

The LIDAR scanner may be one or more of the cameras 30 and may contain a mirror therein to direct a laser beam along any of one thousand orientations relative to the scanner. Alternatively, the LIDAR scanner may be an array of laser beams that are fixed relative to the AGV 12 or the scanner may be movable in the vertical direction V along the rail 42.

FIG. 2A illustrates an example of the plurality of optical images 50a through 50x (collectively, the images 50) that are taken by the cameras 30 during an image scan of a physical location and the single mosaic image 60 that is created by the image processor from the images 50. While the examples describe the physical location as a datacenter, it should be understood that the physical location may be any type of location.

Each of these optical images may be correlated with dimensional data that is taken by the LIDAR scanner. For example, each of the images 50 may be overlaid with corresponding LIDAR data at one thousand points, such that when each image is correlated with the corresponding LIDAR data, one thousand locations within each image will be known relative to the location of the AGV 12, within a known coordinate system of the datacenter.

In the example shown, the images 50 are arranged in a four-by-six grid, with six rows of four images each extending in the horizontal direction H. However, it should be understood that the number and arrangement of images may be varied. As shown in FIG. 2A, the four cameras 30 shown in FIGS. 1B through 1D each have taken six image scans, each set of scans S 1 through S6 being represented by a different horizontal row in the figure. Each of the image scans S1 through S6 was taken at a different vertical position along the carriage 44, such as P1 through PN, where N=6. Therefore, the plurality of images 50 includes a first set S 1 of the images taken at a first vertical position P1 that includes the images 50a-50d, a second set S2 of the images taken at a second vertical position P2 that includes the images 50e-50h, through to an Nth set of the images (S6 in this example) taken at an Nth vertical position PN that includes the images 50u-50x. The first vertical position P1, the second vertical position P2, and the Nth vertical position PN of the carriage 44 are spaced apart from one another in the vertical direction V.

In the example shown in FIGS. 2A and 2B, the plurality of images 50 are images of one area of the datacenter. The images 50a through 50x taken by the cameras 30 in the positions P1 through PN may be combined into the single mosaic image 60 using an image processor. For example, the image processor may identify objects within the images, detect boundaries within the images, and stitch the images together such that the objects within the images appropriately align. Once the single mosaic image 60 is created, the image processor may optionally parse the single mosaic image to extract asset location information and asset tag barcode information. Once the asset location information and asset tag barcode information is extracted, a wireless communication component may send the optical and distance information from the cameras 30 to a remote computer.

To make a full single mosaic image 60 with no horizontal or vertical gaps, there may be a small amount of overlap between the field of view recorded in adjacent ones of the images 50. However, in other examples, there may be no overlap between the field of view recorded in adjacent ones of the images 50, since a complete imaging of the datacenter may not be necessary to identify the specific components or types of components and their locations within the datacenter, or to parse the single mosaic image to extract asset location information and asset tag barcode information. The example image 60 may be a single image out of a set of 20, 50, 100, or 500 images of the entire datacenter. Any number of images 60 may be combined to permit the entire datacenter to be imaged.

According to other examples, the 360 image of FIG. 2B may be generated using a single 360 camera.

Referring to FIG. 2C, the images 60 may be mapped onto a single 3D mosaic datacenter map 62, which may be a 3D blueprint of all of the racks, hallways, wireways, etc., contained in the datacenter. In some examples, the optical images 60 and the lidar data may both be combined to create the single mosaic datacenter map 62. The post-processing to map the optical and lidar data together may be performed by an image processor that is at a location remote from the AGV 12. Such processing may be completely automated, for example, such that the map is generated without user intervention. For example, the image processor may correlate the optical data and the LIDAR data, and further correlate to positional coordinates within the physical location. Using such correlation, the map may be generated. Such a map 62 may be available to a user, such that when a user clicks on a particular location on the map, a corresponding one of the images 60 may be displayed. In this way, a user may obtain an on-demand optical view of any portion of the map 62, from a viewpoint similar to what the user may see if he or she was inside of the datacenter.

The map 62 may also be used to calculate a distance between features that are visible on the map. For example, a user may calculate a distance by placing two virtual pins on the map, and the map may show the distance between the pins, within plus or minus 10 mm. The map 62 may also be used to determine the size of the objects within the datacenter, such as the width of a column or the width of a rack, to an accuracy of plus or minus 10 mm.

The map 62 may be periodically updated via collection of new data by the AGV 12. To update the map 62, a user may command the AGV 12 to travel to one more desired locations within the datacenter to collect new optical and LIDAR data, and such data may replace the portions of the map that may have become outdated due to repositioning of items within the datacenter. Each set of optical and LIDAR data may be correlated with the date and time that the data was collected, to assist a user in knowing whether or not portions of the map 62 have become outdated and need to be updated.

Referring to FIG. 3, an example control system 100 is illustrated. As shown, the control system 100 includes one or more computing devices 110 coupled to various components 120-125, such as AGV navigation system 120, positioning system 121, lighting 122, perception system 123, cleaning components 124, and power system 125. The computing device 110 further includes one or more processors 111, memory 112, and other components typically present in microprocessors, general purpose computers, or the like.

The one or more processors 111 may be any conventional processors, such as commercially available microprocessors. Alternatively, the one or more processors may be a dedicated device such as an application specific integrated circuit (ASIC) or other hardware-based processor. In some examples, the one or more processors may include a graphics processing unit (GPU) and/or a tensor processing unit (TPU), for example, for machine-learning based perception. Although FIG. 3 functionally illustrates the processor, memory, and other elements of computing device 110 as being within the same block, it will be understood by those of ordinary skill in the art that the processor, computing device, or memory may actually include multiple processors, computing devices, or memories that may or may not be stored within the same physical housing. Similarly, the memory may be a hard drive or other storage media located in a housing different from that of computing device 110. Accordingly, references to a processor or computing device will be understood to include references to a collection of processors or computing devices or memories that may or may not operate in parallel.

Memory 112 may store information that is accessible by the processors 111, including instructions 113 that may be executed by the processors, and data 114 such as asset location information and/or asset tag barcode information. Such instructions 113 may include detecting camera positioning based on sensor feedback, adjusting positions of the imaging system, capturing images of the datacenter rack, and combining images and parsing the mosaic image. The memory 112 may be of a type of memory operative to store information accessible by the processors 111, including a non-transitory computer-readable medium, or other medium that stores data that may be read with the aid of an electronic device, such as a hard-drive, memory card, read-only memory ("ROM"), random access memory ("RAM"), digital versatile disc ("DVD") or other optical disks, as well as other write-capable and read-only memories. The subject matter disclosed herein may include different combinations of the foregoing, whereby different portions of the instructions 113 and data 114 are stored on different types of media.

Data 114 may be retrieved, stored or modified by processors 111 in accordance with the instructions 113. For instance, although the present disclosure is not limited by a particular data structure, the data 114 may be stored in computer registers, in a relational database as a table having a plurality of different fields and records, XML documents, or flat files. The data 114 may also be formatted in a computer-readable format such as, but not limited to, binary values, ASCII or Unicode. By further way of example only, the data 114 may be stored as bitmaps comprised of pixels that are stored in compressed or uncompressed, or various image formats (e.g., JPEG), vector-based formats (e.g., SVG) or computer instructions for drawing graphics. Moreover, the data 114 may comprise information sufficient to identify the relevant information, such as numbers, descriptive text, proprietary codes, pointers, references to data stored in other memories (including other network locations) or information that is used by a function to calculate the relevant data.

In one example, computing device 110 may be an AGV computing system incorporated into control system 100, such as an AGV 12 having an imaging system 20. The computing device may be capable of communicating with various components of the system autonomously, or without continuous input from a human operator. For example, computing device 110 may be in communication with various components 120-125 of the control system 100, which operate in accordance with the instructions 113 of memory 112 in an autonomous mode which does not require or need continuous or periodic input from an operator. Although these systems are shown as external to computing device 110, in other examples these systems may also be incorporated into the computing device.

The instructions 113 may be executed to perform various operations using one or more of the components 120-125 or other components not shown. For example, the AGV navigation system 120 may include a GPS or other system which directs the AGV to a target datacenter rack 1 for imaging. The positioning system 121 may be instructed to respond to feedback provided by the perception system 123, which may include one or more cameras, sensors, etc. For example, the positioning system 121 may include one or more motors or other devices used to control positioning of the AGV 12 and/or cameras 30. As the perception system 123 provides data regarding proximity of the target location within the datacenter to the cameras 30, the positioning system 121 may adjust a position of one or more of the AGV 12 or carriage 44 so as to maintain a position where the cameras are in close proximity to the target location.

Lighting system 122 may include one or more LEDs or other illuminating devices. The lighting system 122 may be instructed to illuminate a target location for imaging of a portion of the datacenter any time the AGV 12 is within a predetermined distance from the target location, when environmental conditions are such that natural light is insufficient, or under any other circumstances. In this regard, the lighting system 122 may also be responsive to input from the perception system 123, such as feedback from light or proximity sensors. Similarly, cleaning components 124 may also respond to feedback from the perception system 123. For example, the one or more processors 111 may determine, based on images captured by the perception system 123, that the target location is dirty. As such dirt may be obstructing information, such as an asset tag barcode that needs to be read to determine which component is in a particular datacenter rack 1, the cleaning components 124 may be instructed to spray air or perform some other operation to clear the debris. The power system 125 may include, for example, a battery for powering the control system 100.

While the components 110-115 and 120-125 are described above in reference to an example of a datacenter imaging mode, it should be understood that the components may also operate in response to operator input or other instructions. For example, the computing device 110 may provide information to a remote computing device, such as an operator control unit, through transmitter/receiver 115. Likewise, the computing device 110 may receive instructions from the remote operator control unit. In other examples, the control system 100 may operate in an autonomous imaging mode, but still provide feedback to a remote computing device using the transmitter/receiver 115.

The design of the automated datacenter imaging system 10 shown in FIGS. 1A-3 is just one example of the automated datacenter imaging system. Many other configurations of the automated datacenter imaging system 10 are contemplated, including imaging systems 20 having different numbers of cameras 30, rails 42 and carriages 44 with different widths, heights, and/or arrangements, and AGVs 12 of various designs. In some configurations, the imaging system 20 may have more or less than four cameras 30, such as 2, 3, 5, 6, 8, or 10, among others. In some examples, image scans may be taken with the carriage 44 at more or less than six different vertical positions, such as 2, 3, 4, 5, 8, 10, 15, or 20, among others.

The automated datacenter imaging system 10 may also be used in environments other than datacenters. For example, the automated imaging system 10 may be used for manufacturing or retail inventory tracking. For example, the imaging system 20 may scan barcodes of products on a rack in a warehouse in the images 50 and in the single mosaic image 60, and such barcodes can be parsed from the single mosaic image by the image processor. In some examples, the imaging system 20 may scan any two-dimensional space, and information may be parsed from the single mosaic image 60 to provide inventory information either based on parsing barcodes from the single mosaic image or based on the shape and arrangement of the individual inventory items.

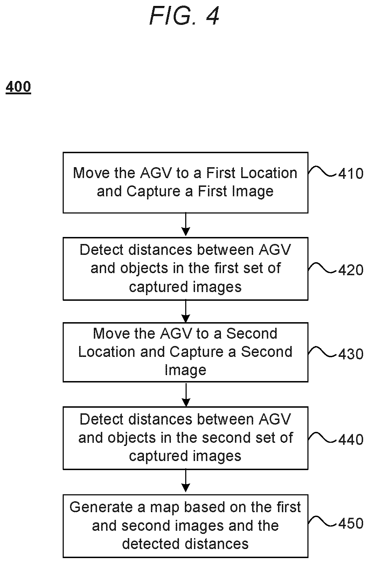

Referring to FIG. 4, a method 400 of imaging a datacenter with an AGV is described. In block 410, the AGV may move to a first location and capture a first set of one or more images. Moving the AGV may be performed, for example, by the AGV navigation system controlling the propulsion system. The AGV navigation system may be controlled by the computing device and/or a human operator that is remote from the AGV. The first set of one or more images may be captured using an array of cameras having different positions and/or camera angles, or the images may be captured by a single camera such as a 360 degree camera. According to some examples, the first set of images may be a single 360 degree image.

According to some examples, the first set of images may be combined into a single mosaic image of the first location. For example, the images may be combined using an image processor, which may be located on the AGV or at a remote location. The single mosaic image may provide, for example, an angular view of the physical location, such as a 360 degree view. According to some examples, multiple sets of images may be captured from multiple locations to generate multiple mosaic images of different locations and having different perspectives.

In block 420, distances between the AGV and various objects in the physical location are detected. The distances may be detected by, for example, laser such as LIDAR or other distance detection mechanisms. The distances may be correlated with the captured images. For example, in some implementations the distances may be computed at substantially a same time as the images are captured, and the distance corresponding to a point in each image may be stored in association with the image. For example, the distance may be a distance between the camera and a center of a field of view of a captured image. As another example, the distance may be the distance between a point on the AGV and an object in the captured image, such as a datacenter rack or a computing device located on the rack, or an identifier such as a barcode tagging the equipment on the rack.

In block 430, the AGV may move from the first location to a second location, for example, by navigating to a second set of coordinates within the physical location. The cameras may capture a second set of one or more images at the second location.

In block 440, distances between the AGV and various objects at the second location are detected.

In block 450, the first and second images and the detected distances may be used to generate a map of the physical location. According to some examples, a known coordinate system of the physical location may further be used to generate the map. The map may be configured such that when a user clicks on a location on the map, a corresponding one of the captured images may be displayed, and dimensions of objects and distances between locations in the map may be provided.

According to another example, an automated datacenter imaging system is provided, including an automated guided vehicle having a housing. The system may include an optical imaging system coupled to the housing and including a plurality of cameras each configured to have a respective field of view, the fields of view being at least partially non-overlapping with one another. The system may include a laser imaging system coupled to the housing and configured to scan the datacenter to obtain a plurality of distances between the housing and a plurality of locations within the datacenter. The system may include an image processor configured to combine a plurality of images taken by the cameras with the plurality of distances taken by the laser imaging system into a single mosaic map, the image processor being configured to locate the plurality of images and the plurality of distances relative to a known coordinate system of the datacenter.

Using the generated map, the automated imaging system may receive a selection of a location within the datacenter map, and the AGV may move to and the selected location to take an updated plurality of images and an updated set of LIDAR data. The updated plurality of images and the updated set of LIDAR data may replace the corresponding images and data within the map.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description of the examples should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible examples. Further, the same reference numbers in different drawings can identify the same or similar elements.

## Claims

1. An automated imaging system (10), comprising:
an automated guided vehicle (12) having a propulsion system (16) configured to move the vehicle (12), and a processor (100) configured to control a motor and a steering system;
an optical imaging system (20), the optical imaging system (20) including a plurality of cameras (30), the cameras (30) each being configured to have a respective field of view (32), the fields of view (32) being at least partially non-overlapping with one another;
a laser imaging system, the laser imaging system configured to scan a physical area to obtain respective distances between the vehicle (12) and a plurality of locations within the physical area; and
one or more processors (111) configured to correlate a plurality of images (50) taken by the cameras (30) with the respective distances taken by the laser imaging system,
wherein the cameras (30) are arranged in an array, and the array is moveable in a vertical direction.

2. The automated imaging system (10) of claim 1, wherein the cameras (30) in the array are spaced apart from one another in a circular pattern that extends in a plane parallel to the vertical direction.

3. The automated imaging system (10) of claim 2, wherein the plurality of images (50) includes a first set (S1) of the images and a first set of the distances taken at a first vertical position (P1) and a second set (S2) of the images and a second set of the distances taken at a second vertical position (P2), the first vertical position (P1) and the second vertical position (P2) being spaced apart from one another in the vertical direction.

4. The automated imaging system (10) of any one of claims 1 to 3, wherein the one or more processors (111) are further configured to combine the plurality of images (50) taken by the cameras (30) with the respective distances taken by the laser imaging system into a map.

5. The automated imaging system (10) of any one of claims 1 to 4, further comprising a wireless communication component configured to communicate with a remote computing system, and
wherein optionally the one or more processors (111) are configured to navigate the vehicle (12) to a particular location based on communication from the remote computing system, the particular location corresponding to at least one of the plurality of images (50) captured by the imaging system (20).

6. The automated imaging system (10) of any one of claims 1 to 5, wherein the propulsion system (16) includes a plurality of wheels (18) rotatably mounted to the housing (14), a driving element configured to rotate the wheels (18), a steering system configured to pivot the wheels (18) and navigate the housing (14) along predetermined paths, and a processor (100) configured to control the motor and the steering system.

7. A method (400) of imaging a physical area with an automated guided vehicle (12), the method comprising:
moving the automated guided vehicle (12) to a plurality of locations within the physical area by a propulsion system (16) that navigates the vehicle (12) along predetermined paths;
taking a plurality of images of the physical area with an optical imaging system (20) coupled to the vehicle (12), the optical imaging system (20) including a plurality of cameras (30), the cameras (30) each being configured to have a respective field of view (32), the fields of view (32) being at least partially non-overlapping with one another;
scanning the physical area with a laser imaging system coupled to the vehicle (12) to obtain a plurality of distances between the vehicle (12) and a plurality of locations within the physical area; and
correlating the plurality of images taken by the cameras (30) with the plurality of distances taken by the laser imaging system,
wherein the cameras (30) are arranged in an array, and the array is moveable in a vertical direction.

8. The method of claim 7, further comprising locating the plurality of images and the plurality of distances relative to a known coordinate system of the physical area.

9. The method of claim 7 or 8, wherein the cameras (30) in the array are spaced apart from one another in a circular pattern that extends in a plane parallel to the vertical direction.

10. The method of claim 9, wherein the taking of the plurality of images includes:
taking a first set (S1) of the images and a first set of the distances at a first vertical position (P1);
moving the array from the first vertical position (P1) to a second vertical position (P2) spaced apart from the first vertical position (P1) in the vertical direction; and
taking a second set (S2) of the images and a second set of the distances at the second vertical position (P2).

11. The method of claim 10, wherein the imaging system includes a fixture having a rail extending in the vertical direction and a carriage coupled to the rail and movable relative to the rail in the vertical direction, the cameras (30) being affixed to the carriage, and the moving of the array includes moving the carriage along the rail from the first vertical position (P1) to the second vertical position (P2).

12. The method of claim 11, wherein the moving of the carriage along the rail is driven by a servo motor coupled to the carriage.

13. The method of any one of claims 9 to 12, further comprising wirelessly sending the plurality of images and the plurality of distances to an image processor, the image processor being part of a computer that is remote from the automated guided vehicle (12), and/or
wherein the moving of the automated guided vehicle (12) to the plurality of locations within the physical area includes moving the automated guided vehicle (12) in a horizontal direction perpendicular to the vertical direction, and the fields of view (32) extend from the plurality of cameras (30) in a depth direction perpendicular to both the horizontal direction and the vertical direction.

## Patentansprüche

1. Automatisiertes Abbildungssystem (10), umfassend:
ein automatisiertes geführtes Fahrzeug (12), das ein Antriebssystem (16) aufweist, das dazu konfiguriert ist, das Fahrzeug (12) zu bewegen, und einen Prozessor (100), der dazu konfiguriert ist, einen Motor und ein Lenksystem zu steuern;
ein optisches Abbildungssystem (20), wobei das optische Abbildungssystem (20) eine Mehrzahl von Kameras (30) enthält, wobei die Kameras (30) jeweils dazu konfiguriert sind, ein jeweiliges Sichtfeld (32) aufzuweisen, wobei sich die Sichtfelder (32) zumindest teilweise nicht miteinander überlappen;
ein Laserabbildungssystem, wobei das Laserabbildungssystem dazu konfiguriert ist, einen physischen Bereich zu scannen, um entsprechende Distanzen zwischen dem Fahrzeug (12) und einer Mehrzahl von Orten innerhalb des physischen Bereichs zu erhalten; und
einen oder mehrere Prozessoren (111), die dazu konfiguriert sind, eine Mehrzahl von Bildern (50), die von den Kameras (30) aufgenommen wurden, mit den jeweiligen Distanzen, die von dem Laserabbildungssystem aufgenommen wurden, zu korrelieren,
wobei die Kameras (30) in einem Array angeordnet sind und das Array in einer vertikalen Richtung beweglich ist.

2. Automatisiertes Abbildungssystem (10) nach Anspruch 1, wobei die Kameras (30) in dem Array in einem kreisförmigen Muster voneinander beabstandet sind, das sich in einer Ebene parallel zu der vertikalen Richtung erstreckt.

3. Automatisiertes Abbildungssystem (10) nach Anspruch 2, wobei die Mehrzahl von Bildern (50) ein erstes Set (S1) der Bilder und ein erstes Set der Distanzen enthält, die an einer ersten vertikalen Position (P1) aufgenommen wurden, und ein zweites Set (S2) der Bilder und ein zweites Set der Distanzen, die an einer zweiten vertikalen Position (P2) aufgenommen wurden, wobei die erste vertikale Position (P1) und die zweite vertikale Position (P2) in der vertikalen Richtung voneinander beabstandet sind.

4. Automatisiertes Abbildungssystem (10) nach einem der Ansprüche 1 bis 3, wobei der eine oder die mehreren Prozessoren (111) ferner dazu konfiguriert sind, die Mehrzahl von Bildern (50), die von den Kameras (30) aufgenommen wurden, mit den jeweiligen von dem Laserabbildungssystem aufgenommenen Distanzen zu einer Karte kombinieren.

5. Automatisiertes Abbildungssystem (10) nach einem der Ansprüche 1 bis 4, ferner umfassend eine drahtlose Kommunikationskomponente, die dazu konfiguriert ist, mit einem entfernten Computersystem zu kommunizieren, und
wobei optional der eine oder die mehreren Prozessoren (111) dazu konfiguriert sind, das Fahrzeug (12) basierend auf einer Kommunikation von dem entfernten Computersystem zu einem bestimmten Ort zu navigieren, wobei der bestimmte Ort mindestens einem von der Mehrzahl von Bildern (50) entspricht, die von dem Abbildungssystem (20) aufgenommen wurden.

6. Automatisiertes Abbildungssystem (10) nach einem der Ansprüche 1 bis 5, wobei das Antriebssystem (16) eine Mehrzahl von Rädern (18) enthält, die drehbar an dem Gehäuse (14) befestigt sind, ein Antriebselement, das dazu konfiguriert ist, die Räder (18) zu drehen, ein Lenksystem, das dazu konfiguriert ist, die Räder (18) zu schwenken und das Gehäuse (14) entlang vorbestimmter Pfade zu navigieren, und einen Prozessor (100), der dazu konfiguriert ist, den Motor und das Lenksystem zu steuern.

7. Verfahren (400) zum Abbilden eines physischen Bereichs mit einem automatisierten geführten Fahrzeug (12), wobei das Verfahren umfasst:
Bewegen des automatisierten geführten Fahrzeugs (12) zu einer Mehrzahl von Orten innerhalb des physischen Bereichs durch ein Antriebssystem (16), das das Fahrzeug (12) entlang vorbestimmter Pfade navigiert;
Aufnehmen einer Mehrzahl von Bildern des physischen Bereichs mit einem optischen Abbildungssystem (20), das an das Fahrzeug (12) gekoppelt ist, wobei das optische Abbildungssystem (20) eine Mehrzahl von Kameras (30) enthält, die jeweils dazu konfiguriert sind, ein entsprechendes Sichtfeld (32) aufzuweisen, wobei sich die Sichtfelder (32) zumindest teilweise nicht miteinander überlappen;
Scannen des physischen Bereichs mit einem an das Fahrzeug (12) gekoppelten Laserabbildungssystem, um eine Mehrzahl von Distanzen zwischen dem Fahrzeug (12) und einer Mehrzahl von Orten innerhalb des physischen Bereichs zu erhalten; und
Korrelieren der Mehrzahl von Bildern, die von den Kameras (30) aufgenommen wurden, mit der Mehrzahl von Distanzen, die von dem Laserabbildungssystem aufgenommen wurden,
wobei die Kameras (30) in einem Array angeordnet sind und das Array in einer vertikalen Richtung beweglich ist.

8. Verfahren nach Anspruch 7, ferner umfassend Lokalisieren der Mehrzahl von Bildern und der Mehrzahl von Distanzen relativ zu einem bekannten Koordinatensystem des physischen Bereichs.

9. Verfahren nach Anspruch 7 oder 8, wobei die Kameras (30) in dem Array in einem kreisförmigen Muster voneinander beabstandet sind, das sich in einer Ebene parallel zu der vertikalen Richtung erstreckt.

10. Verfahren nach Anspruch 9, wobei das Aufnehmen der Mehrzahl von Bildern enthält:
Aufnehmen eines ersten Sets (S1) der Bilder und eines ersten Sets der Distanzen an einer ersten vertikalen Position (P1);
Bewegen des Arrays von der ersten vertikalen Position (P1) zu einer zweiten vertikalen Position (P2), die von der ersten vertikalen Position (P1) in der vertikalen Richtung beabstandet ist; und
Aufnehmen eines zweiten Sets (S2) der Bilder und eines zweiten Sets der Distanzen an der zweiten vertikalen Position (P2).

11. Verfahren nach Anspruch 10, wobei das Abbildungssystem eine Fixierung enthält, die eine sich in der vertikalen Richtung erstreckende Schiene und einen mit der Schiene gekoppelten und relativ zu der Schiene in vertikaler Richtung beweglichen Träger enthält, wobei die Kameras (30) an dem Träger fixiert sind und das Bewegen des Arrays ein Bewegen des Trägers entlang der Schiene von der ersten vertikalen Position (P1) zu der zweiten vertikalen Position (P2) enthält.

12. Verfahren nach Anspruch 11, wobei das Bewegen des Trägers entlang der Schiene durch einen mit dem Träger gekoppelten Servomotor angetrieben wird.

13. Verfahren nach einem der Ansprüche 9 bis 12, ferner umfassend ein drahtloses Senden der Mehrzahl von Bildern und der Mehrzahl von Distanzen an einen Bildprozessor, wobei der Bildprozessor Teil eines Computers ist, der von dem automatisierten geführten Fahrzeug (12) entfernt ist, und/oder
wobei das Bewegen des automatisierten geführten Fahrzeugs (12) zu der Mehrzahl von Orten innerhalb des physischen Bereichs ein Bewegen des automatisierten geführten Fahrzeugs (12) in einer horizontalen Richtung orthogonal zu der vertikalen Richtung enthält, und die Sichtfelder (32) sich von der Mehrzahl von Kameras (30) in einer Tiefenrichtung orthogonal zu sowohl der horizontalen Richtung als auch der vertikalen Richtung erstrecken.

## Revendications

1. Un système (10) d'imagerie automatisé, comprenant :
un véhicule guidé automatisé (12) ayant un système de propulsion (16) configuré pour déplacer le véhicule (12), et un processeur (100) configuré pour commander un moteur et un système de direction ;
un système (20) d'imagerie optique, le système (20) d'imagerie optique comprenant une pluralité de caméras (30), les caméras (30) étant chacune configurées pour avoir un champ de vision respectif (32), les champs de vision (32) étant au moins partiellement sans chevauchement les uns avec les autres ;
un système d'imagerie laser, le système d'imagerie laser étant configuré pour balayer une zone physique afin d'obtenir des distances respectives entre le véhicule (12) et une pluralité d'emplacements à l'intérieur de la zone physique ; et
un ou plusieurs processeurs (111) configurés pour corréler une pluralité d'images (50) prises par les caméras (30) avec les distances respectives prises par le système d'imagerie laser,
les caméras (30) étant agencées en un réseau, et le réseau étant mobile dans le sens vertical.

2. Le système (10) d'imagerie automatisé selon la revendication 1, dans lequel les caméras (30) du réseau sont espacées les unes des autres selon un motif circulaire qui s'étend dans un plan parallèle à la direction verticale.

3. Le système (10) d'imagerie automatisé selon la revendication 2, dans lequel la pluralité d'images (50) comprend un premier ensemble (S1) des images et un premier ensemble des distances prises à une première position verticale (P1) et un deuxième ensemble (S2) des images et un deuxième ensemble des distances prises à une deuxième position verticale (P2), la première position verticale (P1) et la deuxième position verticale (P2) étant espacées l'une de l'autre dans la direction verticale.

4. Le système (10) d'imagerie automatisé selon l'une quelconque des revendications 1 à 3, dans lequel le ou les processeurs (111) sont en outre configurés pour combiner la pluralité d'images (50) prises par les caméras (30) avec les distances respectives prises par le système d'imagerie laser dans une carte.

5. Le système (10) d'imagerie automatisé selon l'une quelconque des revendications 1 à 4, comprenant en outre un composant de communication sans fil configuré pour communiquer avec un système informatique distant, et
dans lequel optionnellement le ou les processeurs (111) sont configurés pour diriger le véhicule (12) vers un emplacement particulier sur la base d'une communication depuis le système informatique distant, l'emplacement particulier correspondant à au moins une image de la pluralité d'images (50) capturées par le système d'imagerie (20).

6. Le système (10) d'imagerie automatisé selon l'une quelconque des revendications 1 à 5, dans lequel le système de propulsion (16) comprend une pluralité de roues (18) montées de manière rotative sur le boîtier (14), un élément d'entraînement configuré pour faire tourner les roues (18), un système de direction configuré pour faire pivoter les roues (18) et faire naviguer le boîtier (14) le long de trajectoires prédéterminées, et un processeur (100) configuré pour commander le moteur et le système de direction.

7. Un procédé (400) d'imagerie d'une zone physique avec un véhicule guidé automatisé (12), le procédé comprenant :
le fait de déplacer le véhicule guidé automatisé (12) vers une pluralité d'emplacements à l'intérieur de la zone physique par un système de propulsion (16) qui fait naviguer le véhicule (12) le long de trajectoires prédéterminées ;
le fait de prendre une pluralité d'images de la zone physique avec un système (20) d'imagerie optique relié au véhicule (12), le système (20) d'imagerie optique comprenant une pluralité de caméras (30), les caméras (30) étant chacune configurées pour avoir un champ de vision respectif (32), les champs de vision (32) étant au moins partiellement sans chevauchement les uns avec les autres ;
le fait de balayer la zone physique avec un système d'imagerie laser relié au véhicule (12) pour obtenir une pluralité de distances entre le véhicule (12) et une pluralité d'emplacements à l'intérieur de la zone physique ; et
le fait de corréler la pluralité d'images prises par les caméras (30) avec la pluralité de distances prises par le système d'imagerie laser,
les caméras (30) étant agencées en un réseau, et le réseau étant mobile dans une direction verticale.

8. Le procédé selon la revendication 7, comprenant en outre le fait de localiser la pluralité d'images et la pluralité de distances par rapport à un repère connu de la zone physique.

9. Le procédé selon la revendication 7 ou la revendication 8, dans lequel les caméras (30) du réseau sont espacées les unes des autres selon un motif circulaire qui s'étend dans un plan parallèle à la direction verticale.

10. Le procédé selon la revendication 9, dans lequel la prise de la pluralité d'images comprend :
le fait de prendre un premier ensemble (S1) des images et un premier ensemble des distances à une première position verticale (P1) ;
le fait de déplacer le réseau de la première position verticale (P1) à une deuxième position verticale (P2) espacée de la première position verticale (P1) dans la direction verticale ; et
le fait de prendre un deuxième ensemble (S2) des images et un deuxième ensemble des distances à la deuxième position verticale (P2).

11. Le procédé selon la revendication 10, dans lequel le système d'imagerie comprend un dispositif de fixation ayant un rail s'étendant dans la direction verticale et un chariot relié au rail et mobile par rapport au rail dans la direction verticale, les caméras (30) étant solidaires du chariot, et le déplacement du réseau comprend le fait de déplacer le chariot le long du rail de la première position verticale (P1) à la deuxième position verticale (P2).

12. Le procédé selon la revendication 11, dans lequel le déplacement du chariot le long du rail est piloté par un servomoteur relié au chariot.

13. Le procédé selon l'une quelconque des revendications 9 à 12, comprenant en outre le fait d'envoyer sans fil la pluralité d'images et la pluralité de distances à un processeur d'images, le processeur d'images faisant partie d'un calculateur distant du véhicule guidé automatisé (12), et/ou
dans lequel le déplacement du véhicule guidé automatisé (12) vers la pluralité d'emplacements dans la zone physique comprend le fait de déplacer le véhicule guidé automatisé (12) dans une direction horizontale perpendiculaire à la direction verticale, et les champs de vision (32) s'étendent depuis la pluralité de caméras (30) dans une direction de profondeur perpendiculaire à la fois à la direction horizontale et à la direction verticale.
